# EUROPÄISCHE PATENTSCHRIFT

(11) **EP 1 288 039 B1**
(45) Veröffentlichungstag und Bekanntmachung des Hinweises auf die Patenterteilung: **17.10.2007**
(21) Anmeldenummer: 02018679.7
(22) Anmeldetag: 21.08.2002
(51) Int. Cl.: B60J 5/04, B60J 10/08

(54) **Fahrzeugtüre, insbesondere für ein Kraftfahrzeug**
Doors for vehicles, in particular for motor vehicles
Portes pour véhicules, en particulier pour un véhicule à moteur

(30) Priorität: 31.08.2001 DE 10142688
(43) Veröffentlichungstag der Anmeldung: 05.03.2003
(73) Patentinhaber: AUDI AG, 85045 Ingolstadt (DE)
(72) Erfinder: Schlamp, Konrad, 85116 Egweil (DE)
(74) Vertreter: Engelhardt, Harald

(56) Entgegenhaltungen:
- EP-A- 0 286 836
- DE-A- 19 711 598
- DE-U- 20 003 338
- US-A- 5 379 553
- US-A- 5 987 821

## Beschreibung

Die Erfindung betrifft eine Fahrzeugtüre, insbesondere für ein Kraftfahrzeug, nach dem Oberbegriff des Anspruchs 1.

Fahrzeugtüren sind in bekannter Weise regelmäßig aus einem Türkasten und einem Türrahmen aufgebaut, wobei der Türkasten eine Türkasten-Außenhaut und eine Türkasten-Innenhaut aufweist und mit dem Türrahmen verbunden ist (JP-A-2000127759, EP 0 286 923 B1). Problematisch bei einem derartigen Aufbau einer Fahrzeugtüre ist, dass es im Übergangsbereich zwischen dem Türrahmen und einem diesem zugeordneten Türkastenrandbereich regelmäßig zur Ausbildung von Spalten kommt, durch die einerseits Wasser eintreten kann, was zu unerwünschter Korrosion führen kann und durch die andererseits auch Luft hindurchtreten kann, was zu unerwünschten Windgeräuschen führt, die den Fahrkomfort erheblich beeinträchtigen.

Um diese Probleme zu beseitigen, ist bereits eine Fahrzeugtüre für ein Kraftfahrzeug allgemein bekannt, die einen eine Türkasten-Außenhaut und eine Türkasten-Innenhaut aufweisenden Türkasten umfasst, der mit einem Türrahmen verbindbar ist, wobei im montierten Zustand wenigstens ein Dichtelement im Übergangsbereich zwischen dem Türrahmen und einem diesem zugeordneten Türkastenrandbereich zur Abdichtung des Übergangsbereichs vorgesehen ist. Konkret handelt es sich bei diesen Dichtelementen um ein kompliziert geformtes Dichtstück, das nachträglich, d.h. nach der Verbindung des Türrahmens mit dem Türkasten, auf eine obere Kante des entsprechend zugeordneten Türkastenrandbereichs aufgesteckt wird, um den Übergangsbereich zwischen dem Türkasten und dem Türrahmen abzudichten. Nachteilig hierbei ist, dass es aufgrund von am Dichtelement, am Türrahmen und am Türkasten auftretenden fertigungstechnisch bedingten Toleranzen, Rahmeneinstellungen, Montagefehlern oder dergleichen relativ schwierig ist, das nachträglich auf den Türkastenrandbereich aufgesteckte Dichtelement so anzubringen, dass dieses den Übergangsbereich vollständig abdichtet. Dies führt regelmäßig zu Undichtigkeiten in diesem Übergangsbereich, so dass in unerwünschter Weise trotz der vorhandenen Abdichtung Wasser eindringen kann und es ferner auch zum Auftreten von unerwünschten Windgeräuschen kommen kann. Insbesondere treten derartige Montagefehler häufig bei nicht gerade verlaufenden, d. h. unstetigen Beschnittkanten am Türkastenrandbereich auf.

Aus der gattungsbildenden EP 0 286 836 B1 ist eine Fahrzeugtür für ein Kraftfahrzeug mit einem eine Türkasten-Außenhaut und eine Türkasten-Innenhaut aufweisenden Türkasten bekannt, der mit einem Türrahmen verbunden werden kann. Im montierten Zustand ist wenigstens ein Dichtelement im Übergangsbereich zwischen dem Türrahmen und einem diesem zugeordneten Türkastenrandbereich des Türkastens zur Abdichtung des Übergangsbereiches vorgesehen. Insbesondere ist im Übergangsbereich ein Dichtelement-Aufnahmegehäuse vorgesehen, das einen über eine Aufnahmeraumöffnung zugänglichen Dichtelement-Aufnahmeraum aufweist, in dem das Dichtelement im montierten Zustand aufgenommen ist. Der dem Dichtelement zugeordnete Türbereich liegt im montierten Zustand in einer Anlageverbindung dicht am im Aufnahmegehäuse aufgenommenen Dichtelement an. Konkret ist hier an einem Türrahmen ein unteres, horizontal bzw. waagrecht verlaufendes Rahmenteil vorgesehen, das in einem mittleren Bereich einen Überstand aufweist, der in einer am oberen Türkasten-Außenhautrandbereich ausgebildeten und den Dichtelement-Aufnahmeraum ausbildenden nutförmigen Aufnahme einsteckbar ist, um das Rahmenteil an der Türkasten-Außenhaut lagerichtig zu positionieren. Dementsprechend ist die Nut für eine formschlüssige Aufnahme ebenfalls lediglich in einem mittleren Längsbereich der Türkasten-Außenhaut ausgebildet. Für eine Abdichtung dieser Steckverbindung ist ferner das Einbringen einer Dichtung in diese Dichtungsnut vorgesehen, die in der Dichtungsnut zwischen einem flächigen Seitenwandbereich des Überstandes und einem seitlichen Nutwandbereich angeordnet ist. Ferner soll mit diesem Aufbau und der Anordnung einer Dichtung eine möglichst klapperfreie und einfach zu lösende Verbindung zweier Bauteile einer Fahrzeugtüre geschaffen werden. Nachteilig bei diesem Aufbau ist jedoch, dass mit einer derartigen Anordnung der Übergangsbereich zwischen dem Türrahmen und dem Türkasten nicht vollständig abgedichtet ist, so dass in unerwünschter Weise Wasser eindringen kann und es ferner auch zum Auftreten von unerwünschten Windgeräuschen im Übergangsbereich kommen kann. Dies insbesondere aufgrund von am Türrahmen und am Türkasten auftretender fertigungstechnisch bedingter Toleranzen, Rahmeneinstellungen, Montagefehlern und dergleichen.

Aufgabe der Erfindung ist es daher, eine Fahrzeugtüre, insbesondere für ein Kraftfahrzeug, so auszubilden, dass der gesamte Übergangsbereich zwischen einem Türrahmen und einem diesem zugeordneten Türkastenrandbereich gut und zuverlässig abgedichtet werden kann.

Diese Aufgabe wird gelöst mit den Merkmalen des Anspruchs 1.

Gemäß Anspruch 1 ist vorgesehen, dass der Türrahmen wenigstens ein mit dem Türkasten verbindbares, in etwa vertikal verlaufendes, vorderes und hinteres Rahmenteil aufweist, in deren Übergangsbereich zum Türkastenrandbereich hin ein Aufnahmegehäuse vorgesehen ist.

Mit einer derartigen Ausgestaltung dieses besonders kritischen Übergangsbereiches zwischen einem vorderen und hinteren vertikalen Rahmenteil und einem Türkasten wird eine zuverlässige und funktionssichere Abdichtung ermöglicht.

Insbesondere kann mit einem derartigen Aufbau somit eine besonders zuverlässige Abdichtung des Übergangsbereichs erzielt werden, da mit einem derartigen Aufnahmeraumgehäuse eine stets genau definierte Einbaulage für das Dichtelement ausgebildet wird. Vor allem Montagefehler können dadurch besonders gut vermieden werden. Weiter können durch die genau definierte Einbaulage für das Dichtelement Montagefehler in Bereichen mit unstetigen Beschnittkanten am z. B. Türkastenrandbereich vorteilhaft vermieden werden. Durch diese genau vorgegebene Einbaulage für das Dichtelement kann des Weiteren auch das Einbringen des Dichtelements im Rahmen der Montage besonders einfach und schnell erfolgen.

Ferner kann mit einem derartigen im Übergangsbereich ausgebildeten Aufnahmegehäuse auch eine besonders einfache Zuordnung eines Türkastenrandbereichs oder eines Türrahmenbereichs zu einem im montierten Zustand im Aufnahmegehäuse aufgenommenen Dichtelement vorgenommen werden, so dass auf einfache Weise eine sehr gute und zuverlässige Abdichtung des Übergangsbereichs zwischen einem Türkasten und einem Türrahmen herstellbar ist.

Des Weiteren ergibt sich bei einem derartigen Aufbau auch eine wesentlich geringere Abhängigkeit von herstellungs- und fertigungstechnisch bedingten Toleranzen und von Rahmeneinstellungen oder dergleichen.

Gemäß einer besonders bevorzugten Ausgestaltung der Erfindung ist das Aufnahmegehäuse nach Anspruch 2 am Türrahmen oder alternativ dazu am Türkastenrandbereich vorgesehen. Grundsätzlich kann das Aufnahmegehäuse dabei durch ein separat mit dem Türrahmen oder dem Türkastenrandbereich verbindbares Element hergestellt werden, was jedoch herstellungs- als auch montagetechnisch aufwendig ist. So könnte beispielsweise das Aufnahmegehäuse durch Anschweißen eines entsprechenden Elementes am Türrahmen oder am Türkastenrandbereich ausgebildet werden. Bevorzugt ist jedoch eine integrale Ausbildung des Aufnahmegehäuses im Übergangsbereich entweder am Türrahmen oder am Türkastenrandbereich, was bei der Ausbildung dieser Bauteile als Gussteile besonders einfach durchzuführen ist. Vorteilhaft wird eine integrale Anbringung des Aufnahmegehäuses am Türrahmen, der regelmäßig als Gussteil, z. B. als Stranggussteil hergestellt ist, vorgenommen, da das Aufnahmegehäuse an einem derartigen als Gussteil ausgebildeten Türrahmen besonders einfach an- und/oder eingeformt werden kann. Je nach den individuell gegebenen Einbauverhältnissen kann jedoch auch eine Ausbildung des Aufnahmegehäuses am Türkastenrandbereich vorgesehen sein, insbesondere wenn dieser Türkastenrandbereich als Gussteil ausgebildet ist, wie dies regelmäßig im Scharnier- und Schlossbereich von Türkästen der Fall ist.

Gemäß einer weiteren bevorzugten Ausgestaltung nach Anspruch 3 ist das Dichtelement im im Aufnahmeraum aufgenommenen Zustand mittels dem zugeordneten Türkastenrandbereich oder Türrahmenbereich verpressbar. Durch eine derartige Verpressung wird eine besonders sichere und effektive Abdichtung des Übergangsbereichs erzielt. Eine derartige Verpressung kann nur aufgrund des im Übergangsbereich vorgesehenen Aufnahmegehäuses ausgebildet werden, da dieses als ortsfestes Bauteil im Übergangsbereich die für das Verpressen notwendige Widerstandskraft auf das Dichtelement ausübt. Im Gegensatz zum bloßen Aufstecken des Dichtelements, wie dies beim gattungsgemäßen Stand der Technik der Fall ist, wird hier somit eine wesentlich bessere Abdichtung im kritischen Übergangsbereich erzielt.

Nach Anspruch 4 kann hier zudem vorgesehen sein, dass der Türkastenrandbereich oder der Türrahmenbereich nach dem Verpressen des Dichtelements mit einem Endbereich im Aufnahmegehäuse aufgenommen und gehalten ist. Dadurch wird auch ein besonders stabiler Aufbau in diesem Übergangsbereich geschaffen, der zudem wenig störanfällig ist. Des Weiteren kann hier im Rahmen der Montage ein vorteilhaftes Einfädeln des Türkastenrandbereichs, z. B. der Türkasten-Innenhaut und/oder der Türkasten-Außenhaut im Aufnahmegehäuse vorgenommen werden, was den Montagevorgang selbst wesentlich erleichtert, da eine einfachere Zuordnung der einzelnen Bauteile zueinander möglich ist.

In einer bevorzugten Ausgestaltung hierzu weist nach Anspruch 5 der Türrahmen im Übergangsbereich zum Türkasten ein sich über die Türkastenlänge erstreckendes und in etwa waagrecht verlaufendes Rahmenteil auf, in dessen Übergangsbereich zum Türkastenrandbereich hin ein sich entlang seiner Längserstreckungsrichtung erstreckendes Aufnahmegehäuse ausgebildet ist. Insbesondere mit einem derartigen Aufbau ergibt sich eine besonders effektive Abdichtung im gesamten Übergangsbereich zwischen Türrahmen und Türkasten. Gemäß einer ersten konkreten Ausgestaltung können hierzu nach Anspruch 6 bei das waagrechte Rahmenteil kreuzenden vertikalen Rahmenteilen die Aufnahmegehäuse der vertikalen Rahmenteile integral mit dem Aufnahmegehäuse am waagrechten Rahmenteil ausgebildet sein. Gemäß einer alternativen bevorzugten Ausgestaltung hierzu können nach Anspruch 7 bei das waagrechte kreuzende vertikale Rahmenteilen aber auch die Aufnahmegehäuse in den Übergangsbereichen zwischen den vertikalen Rahmenteilen und den diesen zugeordneten Türkastenrandbereichen sowie zwischen dem waagrechten Rahmenteil und dem diesen zugeordneten Türkastenrandbereich separat und wenigstens teilweise unterschiedlich zueinander ausgebildet sein. Insgesamt ist somit hier eine große Flexibilität und damit Anpassung an die unterschiedlichsten Einbauverhältnisse eines Türrahmens im Türkasten möglich. Dadurch ist ein derartiger Aufbau insbesondere auch für eine Serienfertigung, wie dies im Automobilbau der Fall ist, besonders gut geeignet.

Weiter gibt es verschiedene Möglichkeiten das Aufnahmegehäuse im Übergangsbereich anzuordnen. So ist es beispielsweise möglich, wie dies mit den Merkmalen des Anspruchs 8 beansprucht ist, das Aufnahmegehäuse umlaufend im gesamten Übergangsbereich zwischen dem Türrahmen und dem Türkastenrandbereich auszubilden. Das heißt, dass eine Abdichtung in Türkastenlängsrichtung gesehen sowohl an der Außenseite im Übergangsbereich zwischen dem Türrahmen und der Türkasten-Außenhaut sowie an der Innenseite im Übergangsbereich zwischen dem Türrahmen und der Türkasten-Innenhaut sowie gegebenenfalls auch an den in Türkastenlängsrichtung gesehen Stirnseiten des Übergangsbereichs vorgesehen ist, also überall dort, wo der Türrahmen mit dem Türkasten verbunden wird. Alternativ dazu ist es aber auch möglich, das Aufnahmegehäuse und damit eine Abdichtung lediglich in ausgewählten Bereichen vorzusehen, so z. B. bei einem waagrechten und sich in Türkasten-Längserstreckungsrichtung erstreckenden Rahmenteil des Türrahmens lediglich im Übergangsbereich zwischen dem waagrechten Rahmenteil und der Türkasten-Innenhaut, wie dies mit Anspruch 9 beansprucht ist. Alternativ oder zusätzlich dazu kann auch weiter vorgesehen sein, dass im Bereich eines vorderen oder hinteren vertikalen Rahmenteils des Türrahmens ein Aufnahmegehäuse sowohl einem oberen Türkasten-Innenhautrandbereich als auch einem oberen Türkasten-Außenhautrandbereich zugeordnet ist.

Weiter gibt es je nach den individuellen Einbau- und Aufbauverhältnissen der Fahrzeugtüre verschiedene Möglichkeiten das Aufnahmeraumgehäuse im Übergangsbereich anzuordnen. So ist gemäß einer bevorzugten Ausführungsform nach Anspruch 10 vorgesehen, ein dem oberen Außenhaut- und/oder Innenhautrandbereich des Türkastens zugeordnetes und am Türrahmen ausgebildetes Aufnahmeraumgehäuse bezüglich der Aufnahmeraumöffnung in etwa waagrecht auszurichten und ein Verpressen des darin eingesetzten Dichtelementes von der Seite her mittels einem am oberen Außenhaut- und/oder Innenhautrandbereich des Türkastens angeordneten Verstärkungselementes auszuführen. Ein derartiges Verstärkungselement kann beispielsweise eine Schachtverstärkung, vorzugsweise an einem inneren oberen Außenhautrandbereich sein.

Alternativ dazu kann gemäß einem Aufbau mit den Merkmalen des Anspruchs 11 aber auch vorgesehen sein, dass ein dem oberen Außenhaut- und/oder Innenhautrandbereich des Türkastens zugeordnetes und am Türrahmen ausgebildetes Aufnahmegehäuse mit nach unten in Richtung zum Türkastenrandbereich aufweisender Aufnahmeraumöffnung ausgebildet ist und ein Verpressen von unten her mit einem oberen Außenhaut- und/oder Innenhautrandbereich des Türkastens erfolgt. Auch eine Kombination von Aufnahmegehäuseausbildungen gemäß den Ansprüchen 10 und 11 an einer Fahrzeugtüre ist möglich, z. B. indem eine Ausgestaltung nach Anspruch 10 im Übergangsbereich des Türrahmens zum oberen Außenhautrandbereich und eine Ausgestaltung nach den Merkmalen des Anspruchs 11 im Übergangsbereich zwischen dem Türrahmen und dem oberen Innenhautrandbereich des Türkastens ausgebildet wird. Ebenso sind weitere Kombinationsmöglichkeiten ausführbar.

Gemäß einer besonders bevorzugten Ausgestaltung nach Anspruch 12 ist der Türrahmen als Gussteil, vorzugsweise als Stranggussteil, ausgebildet, wobei das Aufnahmegehäuse am Türrahmen mit im montierten Zustand in Richtung zum zugeordneten Türkastenrandbereich weisender Aufnahmeraumöffnung an- und/oder eingeformt ist. Alternativ oder auch zusätzlich dazu, z. B. in Verbindung mit Kombinationen unterschiedlicher Ausführungen von Aufnahmegehäusen im Übergangsbereich, kann nach Anspruch 13 aber auch vorgesehen sein, dass wenigstens ein Teilbereich eines Türkastens, vorzugsweise ein einem vorderen Rahmenteil zugeordneter Türkasten-Scharnierbereich und/oder ein einem hinteren Rahmenteil zugeordneter Türkasten-Schlossbereich, als Gussteil ausgebildet ist. An diesem als Gussteil ausgebildeten Türkastenbereich ist dann vorzugsweise das Aufnahmegehäuse mit in Richtung zum zugeordneten Türrahmenbereich weisender Aufnahmeraumöffnung an- und/oder eingeformt.

Das Aufnahmeraumgehäuse kann je nach den individuellen Einbau- und Aufbauverhältnissen der Fahrzeugtüre eine unterschiedliche Form aufweisen. Bevorzugt ist nach Anspruch 14 jedoch das Aufnahmegehäuse durch einen dachartigen Vorsprung gebildet, der zusammen mit den zugeordneten Rahmenteilbereich im Querschnitt gesehen in etwa V- oder U-förmig ausgebildet ist. In einem derartigen Aufnahmegehäuse lassen sich Dichtelemente besonders einfach einsetzen bzw. anordnen.

Gemäß Anspruch 15 sind die Dichtelemente z. B. durch Klemmung oder durch Klebung im Aufnahmegehäuse einsetzbar. Alternativ oder zusätzlich dazu können das oder die Dichtelemente auch mittels entsprechender Rasteinrichtungen in das Aufnahmegehäuse eingeklippst werden. Weiter ist es nach Anspruch 16 aber auch möglich, dass das Dichtelement vor dessen Einsetzen in den Aufnahmeraum und einem sich daran gegebenenfalls anschließenden Verpressen vor der Montage auf den zugeordneten Türkastenrandbereich aufgesteckt wird.

Eine besonders gute und effektive Abdichtung ergibt sich zudem mit den Merkmalen des Anspruchs 17, wenn das oder die Dichtelemente bezüglich des zugeordneten Aufnahmeraums mit einem Übermaß ausgebildet sind. Dadurch können zum einen fertigungs- und/oder herstellungsbedingte Toleranzen sehr gut ausgeglichen werden. Insbesondere ergibt sich jedoch ein besonders gutes Verpressen des Dichtelements beim Einsetzen des zugeordneten Türkastenrandbereichs. Das eben gesagte gilt selbstverständlich auch im umgekehrten Falle, wenn das Verpressen der Dichtung mittels einem Türrahmenbereich des Türrahmens erfolgt.

Grundsätzlich gibt es verschiedene Möglichkeiten, das Dichtelement im Einzelnen auszubilden, so z. B. aus einem Elastomermaterial. Gemäß einer besonders bevorzugten Ausführungsform ist das Dichtelement nach Anspruch 18 jedoch durch eine Formdichtung aus einem geschlossenporigen Schaum hergestellt, vorzugsweise als Strang-Schaumband. Mit einem derartigen geschlossenporigen Schaum bzw. Schaumband ist eine besonders einfache und gute Abdichtung erzielbar.

Die Erfindung wird nachfolgend anhand einer Zeichnung näher erläutert.

Es zeigen:
- Fig. 1: eine schematische, perspektivische Darstellung einer erfindungsgemäßen Fahrzeugtüre mit einem Türkasten sowie einem damit verbundenen Türrahmen,
- Fig. 2: eine schematische, perspektivische Darstellung einer Türkasten-Innenhaut des Türkastens gemäß Fig. 1,
- Fig. 3: eine schematische, perspektivische Darstellung des Türrahmens der Fig. 1,
- Fig. 4: eine schematische Schnittansicht entlang der Linie B-B der Fig. 1 und 3,
- Fig. 5: eine schematische Schnittansicht entlang der Linie A-A und C-C der Fig. 1 und 3, und
- Fig. 6 bis 9: schematische Schnittansichten alternativer Ausführungsformen eines Übergangsbereichs zwischen einem Türkasten und einem Türrahmen.

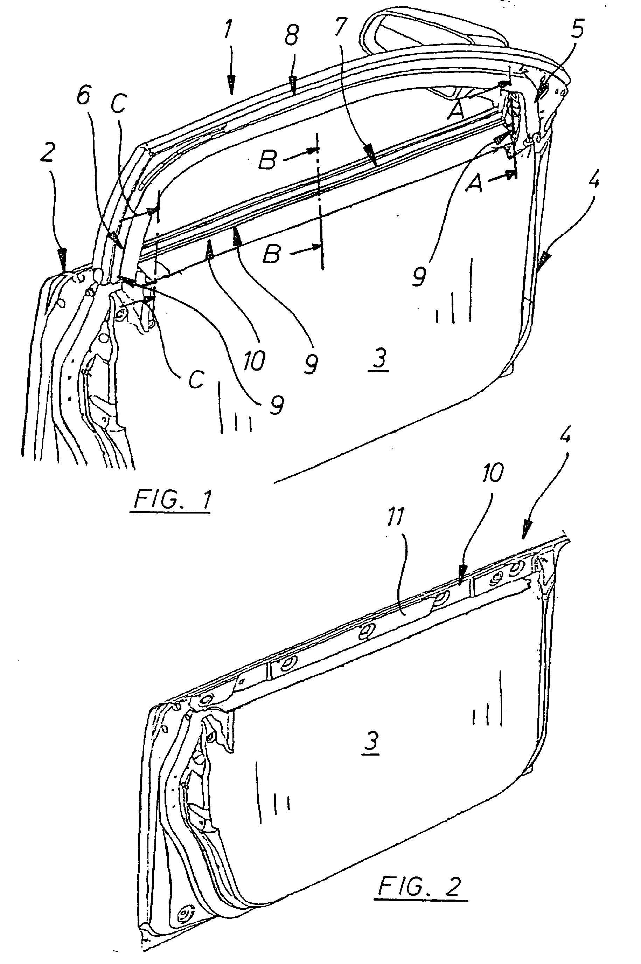

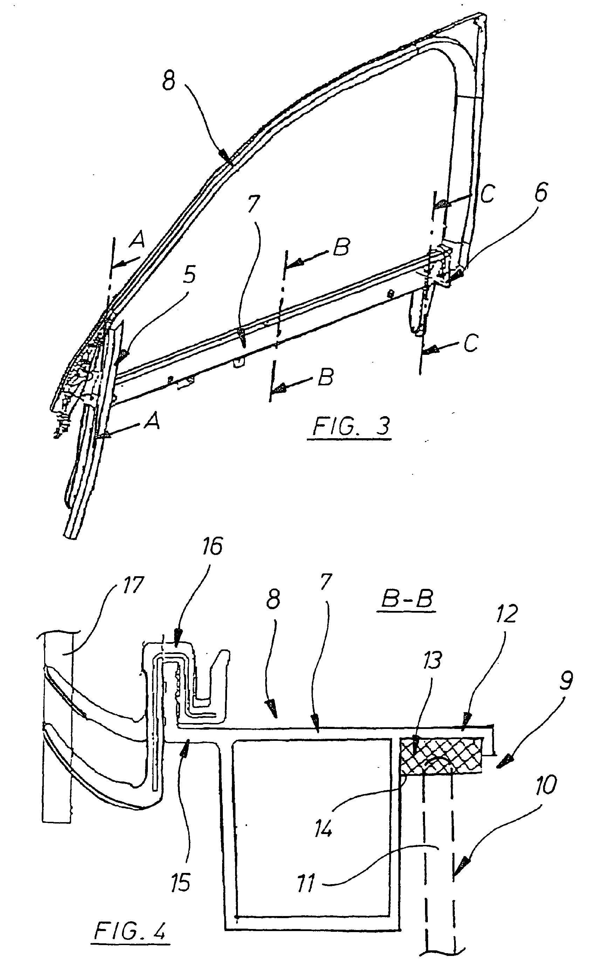

In Fig. 1 ist schematisch und perspektivisch eine Fahrzeugtüre 1 für ein Kraftfahrzeug gezeigt, die einen eine Türkasten-Außenhaut 2 und eine Türkasten-Innenhaut 3 aufweisenden Türkasten 4 umfasst, der mit einem ein vorderes Rahmenteil 5, ein hinteres Rahmenteil 6 sowie ein waagrechtes Rahmenteil 7 aufweisenden Türrahmen 8 verbunden ist. Dieser Türrahmen 8 ist in einer schematischen und perspektivischen Darstellung auch in der Fig. 3 in Alleinstellung gezeigt.

Ferner ist die Türkasten-Innenhaut 3 in der Fig. 2 in einer schematischen Einzeldarstellung gezeigt.

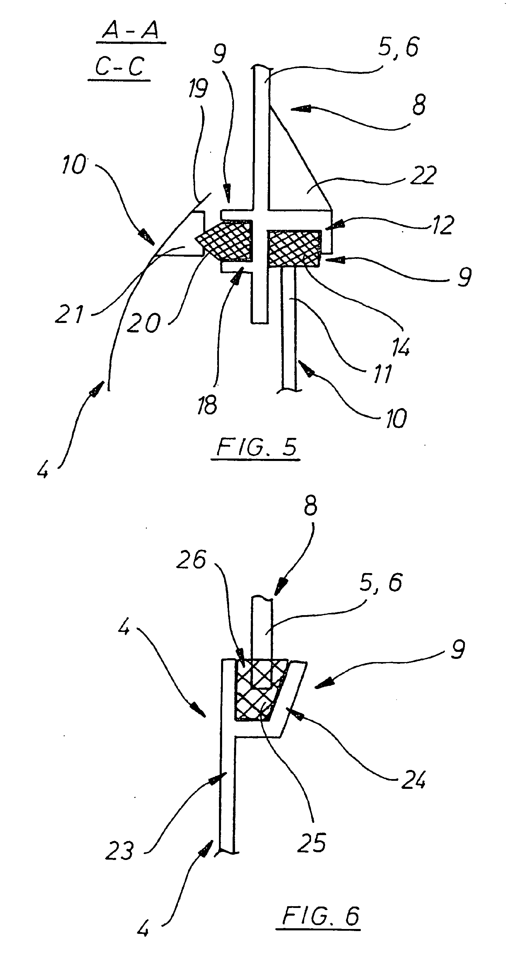

Wie dies insbesondere aus der Fig. 4 und der Fig. 5 ersichtlich ist, ist in einem Übergangsbereich 9 zwischen dem mit dem Türkasten 4 verbundenen Türrahmen 8 und einem diesem zugeordneten oberen Türkastenrandbereich 10 eine Abdichtung vorgesehen.

Wie dies aus der Fig. 4 ersichtlich ist, die einen Schnitt entlang der Linie B-B der Fig. 1 und 3 zeigt, ist dazu im Übergangsbereich 9 des waagrechten Rahmenteils 7 zu einem oberen Innenhautrandbereich 11 des Türkastens 4 ein durch einen dachartigen Vorsprung gebildetes Aufnahmegehäuse 11 vorgesehen, das zusammen mit dem zugeordneten Türrahmenbereich des waagrechten Rahmenteils 7 einen in etwa U-förmigen Querschnitt ausbildet.

Wie dies aus der Fig. 4 weiter ersichtlich ist, ist im montierten Zustand in einem über eine Aufnahmeraumöffnung zugänglichen Aufnahmeraum 13 des Aufnahmegehäuses 12 ein als Schaumband ausgebildetes Dichtelement 14 aufgenommen, das in diesem montierten Zustand zudem vom oberen Innenhautrandbereich 12 der Türkasten-Innenhaut 3 verpresst wird.

Auf der dem Aufnahmegehäuse 12 gegenüberliegenden Seite des waagrechten Rahmenteils 7 ist ein weiterer Vorsprung 15 angeordnet, auf dem ein Scheibendichtelement 16 für eine Türscheibe 17, die zwischen der Türkasten-Außenhaut 2 oder Türkasten-Innenhaut 3 höhenverstellbar ist, aufgesetzt ist, worauf hier jedoch nicht näher eingegangen wird.

Der gesamte Türrahmen 8 ist hier z. B. als Stranggussteil ausgebildet, so dass das Aufnahmegehäuse 12 am waagrechten Rahmenteil 7 während der Herstellung auf einfache Weise mit angeformt werden kann.

Wie dies insbesondere der Fig. 5 entnommen werden kann, ist im Bereich der beiden in etwa vertikal verlaufenden vorderen und hinteren Rahmenteile 5, 6 im Übergangsbereich 9 zwischen dem Türrahmen 8 und dem Türkasten 4 zudem auch noch ein Aufnahmegehäuse 18 auf der dem Aufnahmegehäuse 12 gegenüberliegenden Seite der Rahmenteile 5, 6 angeordnet, das einem oberen Außenhautrandbereich der Türkasten-Außenhaut 2 des Türkastens 4 zugeordnet ist. Während das Aufnahmegehäuse 12 eine nach unten gerichtete Aufnahmeraumöffnung aufweist, ist die Aufnahmeraumöffnung des Aufnahmegehäuses 18 hier um 90° gedreht zur Seite hin weisend ausgebildet. In diesem Aufnahmegehäuse 18 ist ein Dichtelement 20, das z. B. wiederum als Schaumband ausgeführt sein kann, aufnehmbar, das im in der Fig. 5 schematisch gezeigten montierten Zustand mittels einer am oberen Außenhautrandbereich 19 ausgebildeten Schachtverstärkung 21 verpresst wird.

Wie dies der schematischen Darstellung der Fig. 5 zudem weiter entnommen werden kann, können am vorderen hinteren Rahmenteil 5, 6 zudem auch Versteifungsrippen 22 ausgebildet sein, die dann den Aufbau in diesen Bereich besonders gut versteifen.

Während in den vorranggegangenen Figuren die Erfindung stets in Verbindung mit einem am Türrahmen 8 angeformten Aufnahmegehäuse 12, 18 erläutert worden ist, ist in der Fig. 6 lediglich äußerst schematisch und beispielhaft ein Aufbau gezeigt, wie er z. B. bei einem Aufbau einer Fahrzeugtüre verwendet werden kann, bei der an einem Türkasten 4 ein Scharnier- und/oder Schlossbereich des Türkastens im Bereich eines vorderen und hinteren Rahmenteils 6 als Gussteil ausgeführt ist. So ist hier ein Aufnahmegehäuse 24 mit nach oben in Richtung zu dem vorderen und/oder hinteren Rahmenteil 5, 6 weisender Aufnahmeraumöffnung gezeigt, wobei im Aufnahmegehäuse 24 ein Dichtelement 25 aufgenommen ist und mittels dem Rahmenteil 5, 6 verpresst wird. Sehr gut ist hier zu sehen, dass in diesem fertig montierten Zustand ein Endbereich des das Dichtelement 25 verpressenden Rahmenteils 5, 6 im Aufnahmeraum 26 des Aufnahmegehäuses 24 zum Liegen kommt und dadurch auch in gewisser Weise stabil darin gehalten wird.

Vorstehend wurde, wie dies insbesondere aus den Fig. 1 und 3 ersichtlich ist, die Erfindung anhand eines Türrahmens 8 erläutert, der ein vorderes Rahmenteil 5, ein hinteres Rahmenteil 6 sowie ein waagrechtes Rahmenteil 7 aufweist. Grundsätzlich kann jedoch auch noch z. B. ein weiteres vertikales Rahmenteil vorgesehen sein, dass z. B. dem vorderen Rahmenteil zugeordnet ist, was hier jedoch nicht dargestellt ist. Im Übergangsbereich dieses Rahmenteils zum Türkasten hin kann dann ebenfalls z. B. ein Aufbau, wie er in Fig. 5 beispielhaft erläutert worden ist, vorgesehen sein.

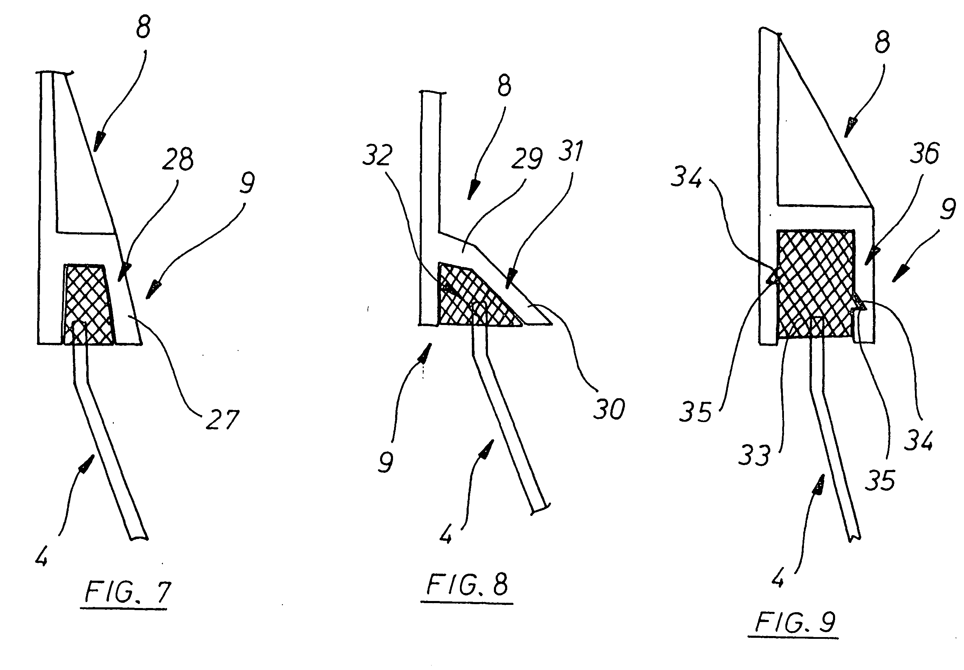

In den Fig. 7 bis 9 sind weitere konstruktive Ausgestaltungen gezeigt, wie sie grundsätzlich überall in einem Übergangsbereich zwischen einem Türrahmen und einem Türkasten verwendet werden können. So ist beispielsweise in der Fig. 7 ein Aufbau gezeigt, bei dem ein äußerer Schenkel 27 eines Aufnahmegehäuses 28 leicht nach außen abgewinkelt ist. In der Fig. 8 ist dagegen eine Ausgestaltung gezeigt, bei dem sowohl ein horizontaler Schenkel 29 als auch ein äußerer Schenkel 30 eines Aufnahmegehäuses 31 mehr winklig ausgebildet sind. Dadurch ist ein Aufnahmeraum 32 des Aufnahmegehäuses 31 im Querschnitt gesehen mehr dreieckförmig ausgebildet.

In der Fig. 9 ist schließlich eine Ausführungsform gezeigt, bei der ein Dichtelement 33 im Querschnitt gesehen an gegenüberliegenden Seiten Rastnasen 34 aufweist, die in entsprechende Aufnahmeprofile 35 eines Aufnahmegehäuses 36 einrastbar sind. Dadurch wird erreicht, dass das Dichtelement 33 in das Aufnahmegehäuse 36 einklippsbar ist.

Alternativ zu einem derartigen Einklipsen können die einzelnen Dichtelemente aber auch in die Aufnahmegehäuse eingeklebt oder eingeklemmt werden. Ebenso ist es möglich, die Dichtelemente zuerst z. B. auf einen oberen Türkastenrandbereich aufzusetzen, so dass dieses dann im Verlauf der Montage des Türkastens in den entsprechend zugeordneten Aufnahmeraum eines Aufnahmegehäuses eingepresst wird.

## Patentansprüche

1. Fahrzeugtüre, insbesondere für ein Kraftfahrzeug, mit einem eine Türkasten-Außenhaut und eine Türkasten-Innenhaut aufweisenden Türkasten (4), der mit einem Türrahmen (8) verbindbar ist, wobei im montierten Zustand wenigstens ein Dichtelement (14; 20; 25; 33) im Übergangsbereich (9) zwischen dem Türrahmen (8) und einem diesem zugeordneten Türkastenrandbereich des Türkastens (4) zur Abdichtung des Übergangsbereichs (9) vorgesehen ist, wobei im Übergangsbereich (9) ein Dichtelement-Aufnahmegehäuse (12, 18; 24; 28; 31; 36) vorgesehen ist, das einen über eine Aufnahmeraumöffnung zugänglichen Dichtelement-Aufnahmeraum (13,; 26; 32) aufweist, in dem das Dichtelement (14; 20; 25; 33) im montierten Zustand aufgenommen ist, und wobei der dem Dichtelement (14; 20; 25; 33) zugeordnete Türkastenrandbereich (10, 11, 19) oder Türrahmenbereich (5, 6) im montierten Zustand in einer Anlageverbindung dicht am im Aufnahmegehäuse (12, 18; 24; 28; 31; 36) aufgenommenen Dichtelement (14; 20; 25; 33) anliegt,
**dadurch gekennzeichnet,**
**dass** der Türrahmen (8) wenigstens ein mit dem Türkasten (4) verbindbares, in etwa vertikal verlaufendes vorderes und hinteres Rahmenteil (5, 6) aufweist, in deren Übergangsbereich (9) zum Türkastenrandbereich (10) hin das Aufnahmegehäuse (12, 18) vorgesehen ist.

2. Fahrzeugtüre nach Anspruch 1, **dadurch gekennzeichnet, dass** das Aufnahmegehäuse (12, 18; 24; 28; 31; 36) am Türrahmen (8) oder am Türkastenrandbereich (10, 11, 19) vorgesehen ist.

3. Fahrzeugtüre nach Anspruch 1 oder Anspruch 2, **dadurch gekennzeichnet, dass** das Dichtelement (14; 20; 25; 33) im im Aufnahmeraum (13; 26; 32) aufgenommenen Zustand mittels dem zugeordneten Türkastenrandbereich (10, 11, 19) oder Türrahmenbereich (5, 6) verpressbar ist.

4. Fahrzeugtüre nach Anspruch 3, **dadurch gekennzeichnet, dass** der Türkastenrandbereich (10) oder der Türrahmenbereich nach dem Verpressen des Dichtelements (25; 33) mit einem Endbereich im Aufnahmegehäuse (24; 28; 31; 36) aufgenommen und gehalten ist.

5. Fahrzeugtüre nach einem der Ansprüche 1 bis 4, **dadurch gekennzeichnet, dass** der Türrahmen (8) im Übergangsbereich (9) zum Türkasten (4) ein sich über die Türkastenlänge erstreckendes und in etwa waagrecht verlaufendes Rahmenteil (7) aufweist, in dessen Übergangsbereich (9) zum Türkastenrandbereich (10) hin ein sich entlang seiner Längserstreckungsrichtung erstreckendes Aufnahmegehäuse (12) ausgebildet ist.

6. Fahrzeugtüre nach Anspruch 5, **dadurch gekennzeichnet, dass** bei das waagrechte Rahmenteil kreuzenden vertikalen Rahmenteilen die Aufnahmegehäuse der vertikalen Rahmenteile integral mit dem Aufnahmegehäuse am waagrechten Rahmenteil ausgebildet sind.

7. Fahrzeugtüre nach Anspruch 5, **dadurch gekennzeichnet, dass** bei das waagrechte Rahmenteil (7) kreuzenden vertikalen Rahmenteilen (5, 6) die Aufnahmegehäuse (12, 18) in den Übergangsbereich (9) zwischen den vertikalen Rahmenteilen (5, 6) und den diesen zugeordneten Türkastenrandbereichen (10, 11, 19) sowie zwischen dem waagrechten Rahmenteil (7) und dem diesem zugeordneten Türkastenrandbereich (10, 11, 19) separat und ggf. wenigstens teilweise unterschiedlich zueinander ausgebildet sind.

8. Fahrzeugtüre nach einem der Ansprüche 1 bis 7, **dadurch gekennzeichnet, dass** das Aufnahmegehäuse (12, 18) in einem Übergangsbereich (9) zwischen dem Türrahmen (8) und der Türkasten-Innenhaut (11) als Türkastenrandbereich (10) und/oder zwischen dem Türrahmen (8) und der Türkasten-Außenhaut (19) als Türkastenrandbereich (10) angeordnet ist.

9. Fahrzeugtüre nach Anspruch 8, **dadurch gekennzeichnet,**
**dass** im Bereich eines waagrechten Rahmenteils (7) des Türrahmens (8) ein Aufnahmegehäuse (12) nur einem oberen Türkasten-Innenhautrandbereich (11) zugeordnet ist, und/oder
**dass** im Bereich eines vorderen und hinteren vertikalen Rahmenteils (5, 6) des Türrahmens (8) ein Aufnahmegehäuse (12, 18) sowohl einem oberen Türkasten-Innenhautrandbereich (11) als auch einem oberen Türkasten-Außenhautrandbereich (19) zugeordnet ist.

10. Fahrzeugtüre nach einem der Ansprüche 1 bis 9, **dadurch gekennzeichnet, dass** ein dem oberen Außenhaut- und/oder Innenhautrandbereich (19) des Türkastens (4) zugeordnetes und am Türrahmen (8) ausgebildetes Aufnahmegehäuse (18) bezüglich der Aufnahmeraumöffnung in etwa waagrecht ausgerichtet ist und ein Verpressen des darin eingesetzten Dichtelementes (20) seitlich mittels einem am oberen Außenhaut- und/oder Innenhautrandbereich (19) des Türkastens (4) angeordneten Verstärkungselementes (21), vorzugsweise einer Schachtverstärkung, erfolgt.

11. Fahrzeugtüre nach einem der Ansprüche 1 bis 9, **dadurch gekennzeichnet, dass** ein dem oberen Außenhaut- und/oder Innenhautrandbereich (11) des Türkastens (4) zugeordnetes und am Türrahmen (8) ausgebildetes Aufnahmegehäuse (12; 28; 31; 36) mit nach unten in Richtung zum Türkastenrandbereich (10) weisender Aufnahmeraumöffnung ausgebildet ist und ein Verpressen von unten her mit einem oberen Außenhaut- und/oder Innenhautrandbereich (11) des Türkastens (4) erfolgt.

12. Fahrzeugtüre nach einem der Ansprüche 1 bis 11, **dadurch gekennzeichnet,**
**dass** der Türrahmen (8) als Gussteil, vorzugsweise als Stranggussteil, ausgebildet ist, und
**dass** das Aufnahmegehäuse (12, 18; 28; 31; 36) am Türrahmen (8) mit im montierten Zustand in Richtung zum zugeordneten Türkastenrandbereich (10, 11, 19) weisender Aufnahmeraumöffnung an- und/oder eingeformt ist:

13. Fahrzeugtüre nach einem der Ansprüche 1 bis 12, **dadurch gekennzeichnet,**
**dass** wenigstens ein Teilbereich (23) eines Türkastens (4), vorzugsweise ein einem vorderen Rahmenteil zugeordneter Türkasten-Scharnierbereich und/oder ein einem hinteren Rahmenteil zugeordneter Türkasten-Schlossbereich, als Gussteil ausgebildet ist, und
**dass** an diesem als Gussteil ausgebildeten Türkastenbereich (23) das Aufnahmegehäuse (24) mit in Richtung zum zugeordneten Türrahmenbereich (5, 6) weisender Aufnahmeraumöffnung an- und/oder eingeformt ist.

14. Fahrzeugtüre nach einem der Ansprüche 1 bis 13, **dadurch gekennzeichnet, dass** das Aufnahmegehäuse (12, 18; 24; 28; 31; 36) durch einen dachartigen Vorsprung gebildet ist, der zusammen mit dem zugeordneten Türrahmenbereich im Querschnitt gesehen in etwa V- oder U-förmig ausgebildet ist.

15. Fahrzeugtüre nach einem der Ansprüche 1 bis 14, **dadurch gekennzeichnet, dass** die Dichtelemente (14; 20; 25; 33) durch Klemmung oder durch Klebung im Aufnahmegehäuse (12, 18; 24; 28; 31) einsetzbar und/oder mittels entsprechender Rasteinrichtungen (34, 35) in das Aufnahmegehäuse (36) einklippsbar sind.

16. Fahrzeugtüre nach einem der Ansprüche 1 bis 15, **dadurch gekennzeichnet, dass** das Dichtelement vor dem Einsetzen und gegebenenfalls Verpressen im Aufnahmeraum auf den zugeordneten Türkastenrandbereich oder zugeordneten Türrahmenbereich aufsteckbar ist.

17. Fahrzeugtüre nach einem der Ansprüche 1 bis 16, **dadurch gekennzeichnet, dass** das Dichtelement (14; 20; 25; 33) bezüglich des zugeordneten Aufnahmeraums (13; 26; 32) mit einem Übermaß ausgebildet ist.

18. Fahrzeugtüre nach einem der Ansprüche 1 bis 17, **dadurch gekennzeichnet, dass** das Dichtelement (14; 20; 25; 35) eine Formdichtung aus einem geschlossenporigen Schaum, vorzugsweise ein Strang-Schaumband, ist.

## Claims

1. A vehicle door, in particular for a motor vehicle, with a door unit (4) which comprises an outer panel and an inner panel and can be attached to a door frame (8), in which case, in the assembled state, at least one sealing element (14; 20; 25; 33) is provided, in the transitional area (9) between the door frame (8) and an edge of the door unit (4) associated with said door frame (8), for sealing said transitional area (9), and a receptacle (12, 18; 24; 28; 31; 36) for accommodating the sealing element is provided in said transitional area (9) and has a space (13; 26; 32), accessible through an opening, in which the sealing element (14; 20; 25; 33) is accommodated in the assembled state, the edge (10, 11, 19) of the door unit (4) or part (5, 6) of the door frame (8) associated with the sealing element (14; 20; 25; 33) fitting tightly, in the assembled state, against the sealing element (14; 20; 25; 33) accommodated in the receptacle (12, 18; 24; 28; 31; 36),
**characterized in that**
the door frame (8) has at least one front and one rear frame member (5, 6), extending in substantially vertical direction, which can be connected to the door unit (4), the receptacle (12, 18) being provided in the transitional area (9) between said frame member (5, 6) and the edge (10) of the door unit (4).

2. A vehicle door according to Claim 1, **characterized in that** the receptacle (12, 18; 24; 28; 31; 36) is provided on the door frame (8) or on the edge (10, 11, 19) of the door unit (4).

3. A vehicle door according to Claim 1 or Claim 2, **characterized in that** the sealing element (14; 20; 25; 33), in the state received in the space (13; 26; 32), can be compressed by means of the associated edge (10, 11, 19) of the door unit (4) or portion (5, 6) of the door frame (8).

4. A vehicle door according to Claim 3, **characterized in that,** after compression of the sealing element (25; 33), an end portion of the edge (10) of the door unit (4) or of the part of the door frame (8) is received and retained in the receptacle (24; 28; 31; 36).

5. A vehicle door according to one of Claims 1 to 4, **characterized in that**, in the transitional area (9) between door frame (8) and door unit (4), the door frame (8) has a frame member (7) extending over the length of the door unit in substantially horizontal direction, a receptacle (12) being formed along its direction of longitudinal extension in the transitional area (9) so as to face the edge (10) of the door unit (4).

6. A vehicle door according to Claim 5, **characterized in that**, where vertical frame members cross the horizontal frame member, the receptacles of the vertical frame members are formed so as to be integral with the receptacle on the horizontal frame member.

7. A vehicle door according to Claim 5, **characterized in that**, where vertical frame members (5, 6) cross the horizontal frame member (7), the receptacles (12, 18) in the transitional area (9) between the vertical frame members (5, 6) and the edges (10, 11, 19) of the door unit associated with said vertical members (5, 6), as well as between the horizontal frame member (7) and the edge (10, 11, 19) of the door unit associated with said horizontal frame member (7), are formed separately and possibly at least in part so as to be different from one another.

8. A vehicle door according to one of Claims 1 to 7, **characterized in that** the receptacle (12, 18) is provided in a transitional area (9) between the door frame (8) and the inner panel (11) of the door unit as an edge (10) of the door unit and/or between the door frame (8) and the outer panel (19) of the door unit as an edge (10) of the door unit.

9. A vehicle door according to Claim 8, **characterized in that**, in the region of a horizontal frame member (7) of the door frame (8), a receptacle (12) is only associated with an upper edge (11) of the inner panel of the door unit, and/or **in that**, in the region of a front and a rear vertical frame member (5, 6) of the door frame (8), a receptacle (12, 18) is associated with both an upper edge (11) of the inner panel of the door unit and an upper edge (19) of the outer panel of the door unit.

10. A vehicle door according to one of Claims 1 to 9, **characterized in that** a receptacle (18) associated with the upper edge of the outer panel and/or upper edge of the inner panel of the door unit (4) and formed on the door frame (8) is oriented in substantially horizontal direction as regards its opening into the space for receiving the seal, and the sealing element (20) inserted therein is compressed from the side by means of a reinforcing element (21), preferably a shaft reinforcement, provided on the upper edge (19) of the outer panel and/or inner panel of the door unit (4).

11. A vehicle door according to one of Claims 1 to 9, **characterized in that** a receptacle (12; 28; 31; 36) associated with the upper edge (11) of the outer panel and/or inner panel of the door unit (4) and formed on the door frame (8) is formed with an opening oriented downwards towards the edge (10) of the door unit, and compression is achieved from below by means of an upper edge (11) of the outer panel and/or inner panel of the door unit (4).

12. A vehicle door according to one of Claims 1 to 11, **characterized in that** the door frame (8) is formed as a casting, preferably a continuous casting, and **in that** the receptacle (12, 18; 28; 31; 36) is formed on and/or in the door frame (8) with its opening oriented in the assembled state towards the associated edge (10, 11, 19) of the door unit.

13. A vehicle door according to one of Claims 1 to 12, **characterized in that** at least one part (23) of the door unit (4), preferably a hinge area associated with a front frame member and/or a lock area associated with a rear frame member, is formed as a casting, and **in that**, on and/or in this area (23) formed as a casting, the receptacle (24) is formed with its opening oriented towards the associated part (5, 6) of the door frame (8).

14. A vehicle door according to one of Claims 1 to 13, **characterized in that** the receptacle (12, 18; 24; 28; 31; 36) is formed by a roof-like projection which, when seen in cross-section together with the associated area of the door frame, is substantially V- or U-shaped.

15. A vehicle door according to one of Claims 1 to 14, **characterized in that** the sealing elements (14; 20; 25; 33) can be inserted into the receptacle (12, 18; 24; 28; 31) by clamping or by glueing and/or can be clipped into the receptacle (36) by means of appropriate snap-in devices (34, 35).

16. A vehicle door according to one of Claims 1 to 15, **characterized in that**, prior to insertion and possibly compression of the sealing element in the space designed to accommodate it, the sealing element can be fixed to the associated edge of the door unit or to the associated part of the door frame.

17. A vehicle door according to one of Claims 1 to 16, **characterized in that** the sealing element (14; 20; 25; 33) is formed with an overdimension relative to the associated space (13; 26; 32) designed to receive it.

18. A vehicle door according to one of Claims 1 to 17, **characterized in that** the sealing element (14; 20; 25; 35) is a shaped seal made of closed-pore foam, preferably an extruded foam strip.

## Revendications

1. Porte de véhicule automobile, en particulier pour un véhicule automobile à moteur, avec un caisson de porte (4) comprenant une enveloppe extérieure de caisson de porte et une enveloppe intérieure de caisson de porte et qui est raccordable à un encadrement de porte (8), à l'occasion de quoi à l'état monté, au moins un élément étanche (14 ; 20 ; 25 ; 33) est prévu dans la zone de transition (9) entre l'encadrement de porte (8) et une zone de bord du caisson de porte (4) associée à ce dernier pour l'étanchéification de la zone de transition (9), un boîtier de logement de l'élément étanche (12, 18 ; 24 ; 28 ; 31 ; 36) étant prévu dans la zone de transition (9), qui présente un espace de logement de l'élément étanche accessible via une ouverture d'espace de logement, espace dans lequel l'élément étanche (14, ; 20, 25, 33) est réceptionné à l'état monté, et à l'occasion de quoi la zone de bord du caisson de porte (10, 11 ,19) associée à l'élément étanche (14 ; 20 ; 25 ; 33) ou la zone de l'encadrement de porte à l'état monté repose de manière étanche dans un raccord d'installation à l'élément étanche (14 ; 20 ; 25 ; 33) réceptionné dans le boîtier de logement (12, 18 ; 24 ; 28 ; 31 ; 36),
**caractérisée en ce que**,
l'encadrement de porte (8) présente au moins une partie d'encadrement avant et arrière (5, 6) s'étendant à peu près verticalement et raccordable au caisson de porte (4), le boîtier de logement (12, 18) étant prévu dans la zone de transition (9) de ladite partie vers la zone de bord du caisson de porte (10).

2. Porte de véhicule automobile conformément à la revendication 1, **caractérisée en ce que** le boîtier de logement (12, 18 ; 24 ; 28 ; 31 ; 36) est prévu sur l'encadrement de porte (8) ou sur la zone de bord du caisson de porte (10, 11, 19).

3. Porte de véhicule automobile conformément à la revendication 1 ou 2, **caractérisée en ce que** l'élément étanche (14 ; 20 ; 25 ; 33), à l'état reçu dans l'espace de logement (13 ; 26 ; 32), est compressible au moyen de la zone de bord du caisson de porte (10, 11, 19) affectée à ce dernier ou bien de la zone de l'encadrement de porte (5, 6).

4. Porte de véhicule automobile conformément à la revendication 3, **caractérisée en ce que** la zone de bord du caisson de porte (10) ou la zone de l'encadrement de porte après la compression de l'élément étanche (25, 33) est réceptionnée et maintenue par une zone finale dans le boîtier de logement (24 ; 28 ; 31 ; 36).

5. Porte de véhicule automobile conformément à l'une des revendications 1 à 4, **caractérisée en ce que** l'encadrement de porte (8) dans la zone de transition (9) vers le caisson de porte (4) présente une partie d'encadrement (7) s'étendant sur la longueur du caisson de porte et à peu près horizontalement, dans la zone de transition (9) de laquelle, vers la zone de bord du caisson de porte (10), il est formé un boîtier de logement (12) s'étendant le long de son sens de projection longitudinale.

6. Porte de véhicule automobile conformément à la revendication 5, **caractérisée en ce que**, pour les parties d'encadrement verticales croisant la partie d'encadrement horizontale, les boîtiers de logement des parties d'encadrement verticales sont réalisés intégralement avec le boîtier de logement sur la partie d'encadrement horizontale.

7. Porte de véhicule automobile conformément à la revendication 5, **caractérisée en ce que**, pour les parties d'encadrement verticales (5, 6) croisant la partie d'encadrement horizontale (7), les boîtiers de logement (12, 18) sont réalisés séparément et le cas échéant au moins partiellement différemment les uns par rapport aux autres dans la zone de transition (9) entre les parties d'encadrement verticales (5, 6) et les zones de bord du caisson de porte (10, 11, 19) affectées à ces dernières ainsi qu'entre la partie d'encadrement horizontale (7) et la zone de bord du caisson de porte (10, 11, 19) affectée à cette dernière.

8. Porte de véhicule automobile conformément à l'une des revendications 1 à 7, **caractérisée en ce que** le boîtier de logement (12, 18) est disposé dans une zone de transition (9) entre l'encadrement de porte (8) et l'enveloppe intérieure du caisson de porte (11) en tant que zone de bord du caisson de porte (10) et / ou entre l'encadrement de porte (8) et l'enveloppe extérieure du caisson de porte (19) en tant que zone de bord du caisson de porte (10).

9. Porte de véhicule automobile conformément à la revendication 8,
**caractérisée en**
**ce que**, dans le secteur d'une partie d'encadrement horizontale (7) de porte (8), un boîtier de logement (12) est uniquement associé à une zone de bord supérieure d'enveloppe intérieure du caisson de porte (11), et / ou
**en ce que** dans la zone d'une partie d'encadrement verticale avant et arrière (5, 6) de l'encadrement de porte (8), un boîtier de logement (12, 18) est associé aussi bien à une zone de bord supérieure d'enveloppe intérieure du caisson de porte (11) qu'à une zone de bord supérieure d'enveloppe extérieure du caisson de porte (19).

10. Porte de véhicule automobile conformément à l'une des revendications 1 à 9, **caractérisée en ce qu'**un boîtier de logement (18) associé à la zone de bord supérieure de l'enveloppe extérieure et / ou intérieure (19) du caisson de porte (4) et formé sur l'encadrement de porte (8) est orienté à peu près horizontalement par rapport à l'ouverture de l'espace de logement et **en ce qu'**il s'ensuit une compression de l'élément étanche (20) inséré à l'intérieur latéralement au moyen d'un élément de renforcement (21) disposé sur la zone de bord supérieure de l'enveloppe extérieure et /ou intérieure (19) du caisson de porte (4), de préférence une cage de renforcement.

11. Porte de véhicule automobile conformément à l'une des revendications 1 à 9, **caractérisée en ce qu'**un boîtier de logement (12 ; 28 ; 31 ; 36) associé à la zone de bord supérieure de l'enveloppe extérieure et/ ou intérieure (11) du caisson de porte (4) et formé sur l'encadrement de porte (8) est réalisé avec une ouverture d'espace de logement orientée vers le bas, vers la zone de bord du caisson de porte (10) et qu'il s'ensuit une compression par le bas avec une zone de bord supérieure d'enveloppe extérieure et / ou d'enveloppe intérieure (11) du caisson de porte (4).

12. Porte de véhicule automobile conformément à l'une des revendications 1 à 11, **caractérisée en**
**ce que** l'encadrement de porte (8) est réalisé sous la forme d'une pièce moulée en fonte, de préférence d'une pièce moulée en coulée continue, et
**en ce que** le boîtier de logement (12, 18 ; 28 ; 31 ; 36) sur l'encadrement de porte (8) est formé et / ou moulé avec une ouverture d'espace de logement orientée à l'état monté vers la zone de bord de caisson de porte (10, 11, 19) associée.

13. Porte de véhicule automobile conformément à l'une des revendications 1 à 12, **caractérisée en**
**ce qu'**au moins une zone partielle (23) d'un caisson de porte (4), de préférence une zone de charnière de caisson de porte associée à la partie avant de l'encadrement et / ou une zone de serrure de caisson de porte associée à une partie arrière d'encadrement, est réalisée sous forme de pièce moulée en fonte, et **en ce que**, sur cette zone de caisson de porte (23) réalisée sous forme de pièce moulée en fonte, le boîtier de logement (24) est formé et / ou moulé avec une ouverture d'espace de logement orientée vers la zone d'encadrement de portière (5, 6) associée.

14. Porte de véhicule automobile conformément à l'une des revendications 1 à 13, **caractérisée en ce que** le boîtier de logement (12, 18 ; 24 ; 28 ; 31 ; 36) est formé par un avancement en forme de toit, qui est réalisé avec la zone d'encadrement de portière associée, vu en coupe transversale, sous la forme sensiblement d'un V ou d'un U.

15. Porte de véhicule automobile conformément à l'une des revendications 1 à 14, **caractérisée en ce que** les éléments étanches (14 ; 20 ; 25 ; 33) sont insérables dans le boîtier de logement (12, 18 ; 24 ; 28 ; 31) par serrage ou par collage et / ou sont encliquetables dans le boîtier de logement (36) au moyen de systèmes d'encliquetage correspondants (34, 35).

16. Porte de véhicule automobile conformément à l'une des revendications 1 à 15, **caractérisée en ce que** l'élément étanche, avant l'insertion et le cas échéant la compression dans l'espace de logement, peut être placé sur la zone de bord du caisson de porte associée ou sur la zone d'encadrement de portière affectée.

17. Porte de véhicule automobile conformément à l'une des revendications 1 à 16, **caractérisée en ce que** l'élément étanche (14 ; 20 ; 25 ; 33) est réalisé avec une surdimension par rapport à l'espace de logement associé (13 ; 26 ; 32).

18. Porte de véhicule automobile conformément à l'une des revendications 1 à 17, **caractérisée en ce que** l'élément étanche (14 ; 20 ; 25 ; 33) est un joint moulé à partir d'une mousse à pores fermés, de préférence une bande de mousse extrudée.
